# EUROPEAN PATENT APPLICATION

(11) **EP 4 336 478 A1**
(43) Date of publication of application: **13.03.2024**
(21) Application number: 22194936.5
(22) Date of filing: 09.09.2022
(51) Int. Cl.: G09B 23/28, G09B 23/30

(54) **EX VIVO BIOPHANTOM FOR TRAINING OF SURGICAL AND MINIMALLY- INVASIVE SURGICAL PROCEDURES**

(71) Applicant: Otto-von-Guericke-Universität Magdeburg, 39106 Magdeburg (DE)
(72) Inventor: Walles, Prof. Dr. Thorsten, 39104 Magdeburg (DE); Walles, Prof. Dr. Heike, 39104 Magdeburg (DE); Kopp, Dr. Sascha, 39108 Magdeburg (DE)

(57) **Abstract**

The present invention relates an *ex vivo* biophantom for the training of surgical and minimally-invasive surgical procedures.

## Description

The present invention relates an *ex vivo* biophantom for the training of surgical and minimally-invasive surgical procedures.

### BACKGROUND

In industrialized countries and worldwide, 4 of the 10 most frequent causes of death are due to lung diseases. Moreover, the prevalence of primary and secondary lung diseases is rapidly increasing in Germany and worldwide. This trend, which has been ongoing for several years, is currently being massively reinforced by permanent lung parenchymal changes and damage as a result of severe courses of SARS-CoV-2 infection. In particular, the public health importance of lung cancer is increasing significantly: the prevalence of lung cancer in the German population is expected to increase by 13% in men and by 8% in women by 2025, based on cancer registry figures from 2014. The diagnosis and surgical removal of lung cancer at an early stage of the disease is still the only way to cure the patient. Therefore, lung cancer screening by computed tomography of the chest is expected to be introduced in Germany in the next 2 years. It is known from clinical studies that lung cancer screening detects numerous lung foci, which additionally increase the need for minimally-invasive diagnostic procedures including diagnostic lung surgery.All these factors mean that the global market volume for minimally-invasive thoracic surgery will increase by 240% from 2020 to 2028 (2.2 vs 5.5 billion US dollars).

Minimally-invasive catheter-based diagnostic and therapeutic procedures have been established for various subfields of medicine: Unclear tissue changes can be visualized by imaging techniques (e.g., ultrasound, computed tomography (CT), magnetic resonance imaging (MRI)) and then punctured or even removed (= ablated) by biopsy procedures. Unlike other regions of the body, however, the human respiratory system is a dynamic system in which the foci of disease move with the lungs and chest wall in a respiratory-dependent manner. This significantly complicates image-guided interventions. In addition, catheter-based access to the thoracic organs is limited by the thoracic skeleton. Complications during diagnostic or therapeutic interventions on the thoracic organs lead - isolated or in combination - to collapse of the lung and severe intrathoracic bleeding. Both pathologies can lead to life-threatening danger to patients within minutes. Therefore, catheter-based interventions on the chest are not only more technically complex than in other organ systems but must be feasible by medical treatment teams with higher safety and reliability because of the more critical patient hazard.

Physicians and non-physician assistants are trained specifically to perform thoracic interventions and to recognize and treat intervention-related complications. For this purpose, training models are used in teaching practice, which represent the anatomy of the thoracic system in an abstracted form and do not represent the respiratory dynamics. In the context of clinical training, animal cadavers (domestic pig) are regularly used. For the clinical training of thoracic interventions in breathing patients, large animal experiments (sheep, domestic pig) are usually performed. In particular, large-animal trials are of central importance in training surgeons on minimally-invasive video or robot-assisted surgical procedures.

There are numerous artificial models of different body regions, but these never contain living organs or organ parts.

### SUMMARY OF THE INVENTION

In a first aspect, the present invention relates to an *ex vivo* biophantom comprising or consisting of an anatomically realistic thorax imitation with a sternum, thoracic vertebrae, and rib pairs produced using additive manufacturing processes based on 3 D data of real patients; wherein said thorax imitation comprises in its interior: (i) at least one living tissue chamber that comprises a living tissue of a thorax organ or a thorax functional tissue to simulate a thorax organ or a thorax functional tissue of a patient; and (ii) a perfusion system connected to said at least one living tissue chamber which supplies said living tissue with oxygen and nutrients and sets said biophantom in motion to simulate real physiological breathing.

In a second aspect, the present invention relates to the use of the inventive biophantom for *ex vivo* training of surgical and minimally-invasive surgical procedures as well as for research purposes.

In a third aspect, the present invention relates to the use of the inventive biophantom for the development and optimization of implants.

In a fourth aspect, the present invention relates to the use of the inventive biophantom for the development and optimization of surgical operation instruments.

In a fifth aspect, the present invention relates to the use of the inventive biophantom for the development and optimization of exoskeletons.

This summary of the invention does not necessarily describe all features and/or all aspects of the present invention. Other embodiments will become apparent from a review of the ensuing detailed description.

### DETAILLED DESCRIPTION

### Definitions

In the following the invention is described in more detail with reference to the Figures. The described specific embodiments of the invention, examples, or results are, however, intended for illustration only and should not be construed to limit the scope of the invention as indicated by the appended claims in any way.

It is to be understood that this invention is not limited to the particular methodology, protocols, and reagents described herein as these may vary. It is also to be understood that the terminology used herein is to describe particular embodiments only, and is not intended to limit the scope of the present invention which will be limited only by the appended claims. Unless defined otherwise, all technical and scientific terms used herein have the same meanings as commonly understood by one of ordinary skill in the art.

Each of the documents cited in this specification (including all patents, patent applications, scientific publications, manufacturer's specifications, instructions, etc.), whether supra or infra, is hereby incorporated by reference in its entirety. In the event of a conflict between the definitions or teachings of such incorporated references and definitions or teachings recited in the present specification, the text of the present specification takes precedence.

The term "comprising" or variations thereof such as "comprise(s)" according to the present invention (especially in the context of the claims) is to be construed as an open-ended term or non-exclusive inclusion, respectively (i.e., meaning "including, but not limited to,") unless otherwise noted.

The term "comprising" shall encompass and include the more restrictive terms "consisting essentially of" or "comprising substantially", and "consisting of".

In the case of chemical compounds or compositions, the terms "consisting essentially of" or "comprising substantially" mean that specific further components can be present, namely those not materially affecting the essential characteristics of the compound or composition, e.g., unavoidable impurities.

The terms "a", "an", and "the" as used herein in the context of describing the invention (especially in the context of the claims) should be read and understood to include at least one element or component, respectively, and are to be construed to cover both the singular and the plural, unless otherwise indicated herein or clearly contradicted by context.

In addition, unless expressly stated to the contrary, the term "or" refers to an inclusive "or" and not to an exclusive "or" (i.e., meaning "and/or").

All numeric values are herein assumed to be modified by the term "about", whether or not explicitly indicated. Recitation of ranges of values herein is merely intended to serve as a shorthand method of referring individually to each separate value falling within the range, unless otherwise indicated herein, and each separate value is incorporated into the specification as if it were individually recited herein.

The use of terms "for example", "e.g.", "such as", or variations thereof is intended merely to better illuminate the invention and does not pose a limitation on the scope of the invention unless otherwise claimed. These terms should be interpreted to mean "but not limited to" or "without limitation".

The term "biophantom", as used herein, refers to medical (e.g., anatomical) models or medical (e.g., anatomical) imitates that may be used for medical training and doctor-patient interactions. Biophantoms are increasingly used for surgical planning, medical computational models, algorithm verification and validation, and medical device development. Such new applications demand high-fidelity, patient-specific, tissue-mimicking medical biophantoms that can not only closely emulate the geometric structures of human organs but also possess the properties and functions of the organ structure.

The term "anatomically realistic", as used herein, refers to accurately (i.e., anatomically correct) depicting or replicating the body, or a body part, of a human being or animal.

The term "thorax", as used herein, refers to a section of the body trunk of vertebrates such as human beings or animals. The wall of the thorax or rib cage is formed by the thoracic spine (thoracic vertebrae), sternum, ribs (bony thorax), and by muscles. It encloses the thoracic cavity (cavum thoracis) and, because of the dome shape of the diaphragm, also the upper part of the abdominal cavity. The respiratory musculature attached to the thorax externally and internally enables respiration in land-living vertebrates.

The term "thoracic vertebrae ", as used herein, refers to the vertebrae composing the middle segment of the vertebral column (thoracic spine), between the cervical vertebrae and the lumbar vertebrae. In humans, there are twelve thoracic vertebrae. They are distinguished by the presence of facets on the sides of the bodies for articulation with the heads of the ribs, as well as facets on the transverse processes of all, except the eleventh and twelfth, for articulation with the tubercles of the ribs.

The term "sternum", as used herein, refers to a long flat bone located in the central part of the chest of a human being or animal. The sternum or breast bone connects to the ribs via cartilage and forms the front of the rib cage, thus helping to protect the heart, lungs, and major blood vessels from injury.

The term "rib(s)", as used herein, refers to flat bones that form part of the rib cage to help protect internal organs. Humans usually have 24 ribs, in 12 pairs. All ribs are attached at the back to the thoracic vertebrae. At the front of the body, most of the ribs are joined by costal cartilage to the sternum. Ribs connect to vertebrae at the costovertebral joints.

The term "living tissue chamber", as used herein, refers to a container designed for harboring living tissue and to keep the living tissue alive, e.g., using a perfusion system to supply oxygen, nutrients, and other vital components to the living tissue, to remove metabolic products and carbon dioxide, and to maintain the required physiological pH value, temperature, humidity, and osmotic conditions. Tissue chambers may also allow investigation and/or manipulation of the living tissue inside.

The term "thorax organ", as used herein, particularly refers to the heart, lungs, thymus, thoracic blood vessels and thoracic parts of esophagus and trachea.

The term "heart", as used herein, refers to a muscular hollow organ (hollow muscle) found in humans and animals, which pumps blood through the body with contractions and thus ensures the supply of all organs and tissues with oxygen, nutrients, and other vital components contained in the blood. The heart works like a positive displacement pump in that blood is drawn in a valve-controlled manner from supply blood vessels and expelled through other blood vessels.

The term "lung(s)", as used herein, refers to organs of the respiratory system in humans and animals. In humans, two lungs are located near the backbone on either side of the heart. Their function in the respiratory system is to extract oxygen from the air and transfer it into the bloodstream, and to release carbon dioxide from the bloodstream into the atmosphere, in a process of gas exchange. Respiration is driven by different muscular systems in different species.

The term "thymus", as used herein, refers to a specialized primary lymphoid organ of the immune system located in the upper front part of the chest, in the anterior superior mediastinum, behind the sternum, and in front of the heart. Within the thymus, thymus cell lymphocytes or T cells mature. T cells are critical to the adaptive immune system, where the body adapts specifically to foreign invaders.

The term "esophagus", as used herein, refers to an organ in humans and animals through which food passes, aided by peristaltic contractions, from the pharynx to the stomach. The esophagus is a fibromuscular tube, about 25 cm long in human adults, that travels behind the trachea and heart, passes through the diaphragm, and empties into the uppermost region of the stomach. It is known also as the food pipe or gullet.

The term "pharynx", as used herein, refers to a part of the throat behind the mouth and nasal cavity of humans and animals, and above the esophagus and trachea (the tubes going down to the stomach and the lungs). The pharynx carries food to the esophagus.

The term "trachea", as used herein, refers to a cartilaginous tube allowing the passage of air to the bronchi of the lungs.

The term "thorax functional tissue", as used herein, refers to functional anatomical structures inside the thorax not necessarily falling under the above definition of a "thorax organ", examples are tissues of muscles, veins, arteries, nerves, lymphatic vessels, adipose tissue, and pleural membranes.

The term "skin", as used herein, refers to the outer covering of the body of a human being or an animal that acts as a physical barrier between the external environment and the internal environment to protect and maintain the body. The skin may serve to maintain water balance, protect the deeper tissues, excrete wastes, and regulate body temperature, and is the attachment site for sensory receptors which detect pain, sensation, pressure, and temperature.

The term "pleura(e)" or "pleura membrane(s)", as used herein, refers to two opposing layers of serous membranes (smooth tissue membranes which secrete serous fluid to allow lubricated sliding movements between opposing surfaces) overlying the lungs and the inside of the surrounding chest walls (also known as the pulmonary pleurae). The inner pleura, called the visceral pleura, covers the surface of each lung and dips between the lobes of the lung as fissures. The outer layer, called the parietal pleura, lines the inner surfaces of the thoracic cavity on each side of the mediastinum (the central compartment of the thoracic cavity). The visceral and the parietal pleurae are connected at the root of the lung ("hilum"). Between two pleurae is a potential space called the pleural cavity (also pleural space), which is normally collapsed and filled with only a tiny amount of serous fluid (pleural fluid) secreted by the pleurae.

The term "diaphragm", as used herein, also known as thoracic diaphragm, refers to a sheet of internal skeletal muscle in humans and animals that extends across the bottom of the thoracic cavity. The diaphragm is the most important muscle of respiration, and separates the thoracic cavity, containing the heart and lungs, from the abdominal cavity. As the diaphragm contracts, the volume of the thoracic cavity increases, creating a negative pressure there, which draws air into the lungs.

The term "perfusion system", as used herein, generally refers to a system allowing the supply of oxygen, nutrients, and other vital components to living tissue (such as organs, parts of organs, or cell cultures), to remove metabolic products and carbon dioxide, and to maintain the required physiological pH value, temperature, humidity, and osmotic conditions. A simple perfusion system comprises a chamber that houses a living tissue and is provided with tubes for supplying fresh nutrient medium (e.g., blood or a physiological buffer solution containing oxygen, nutrients and other vital components) and for discharging depleted nutrient medium (containing metabolic products and carbon dioxide). For perfusion of organs or parts of organs, the supply/discharge tubes can be connected to the respective arteries and veins. Cell cultures in a tissue chamber can simply be immersed in the nutrient medium. To maintain a continuous supply of nutrient medium to a perfusion system and to discharge depleted nutrient medium, often peristaltic pumps are used.

The term "peristaltic pump", as used herein, refers to a type of positive displacement pump used for pumping a variety of fluids. Peristaltic pumps are also commonly known as roller pumps. The fluid is contained in a flexible tube fitted inside a circular pump casing. Most peristaltic pumps work through rotary motion, though linear peristaltic pumps have also been made. The rotor has some "wipers" or "rollers" attached to its external circumference, which compress the flexible tube as they rotate by. The part of the tube under compression is closed, forcing the fluid to move through the tube. Additionally, as the tube opens to its natural state after the rollers pass, more fluid is drawn into the tube. This process is called peristalsis and is used in many biological systems such as the gastrointestinal tract. Typically, there will be two or more rollers compressing the tube, trapping a body of fluid between them. The body of fluid is transported through the tube, toward the pump outlet. Peristaltic pumps may run continuously, or they may be indexed through partial revolutions to deliver smaller amounts of fluid.

The term "physiological breathing", as used herein, refers to the respiratory cycles of inhaled and exhaled breaths. Inhalation (breathing in) is usually an active movement that brings air into the lungs where the process of gas exchange takes place between the air in the alveoli and the blood in the pulmonary capillaries. Contraction of the diaphragm muscle causes a pressure variation, which is equal to the pressures caused by elastic, resistive, and inertial components of the respiratory system. In contrast, exhalation (breathing out) is usually a passive process.

The term "actuator", as used herein, refers to a component of a machine that is responsible for moving and controlling a mechanism or system. In simple terms, it is a "mover". An actuator usually comprises a control device (controlled by a control signal) and a source of energy. The control signal is usually relatively low energy and may be electric voltage or current, pneumatic, or hydraulic fluid pressure, or even human power. Its main energy source may be an electric current, hydraulic pressure, or pneumatic pressure. When an actuator receives a control signal, it responds by converting the source's energy into mechanical motion.

The term "modular construction", as used herein, refers to a concept according to which the design of complex systems is carried out through the use of independent modules, i.e., components that may be separated and recombined, often with the benefit of flexibility and variety of use.

The term "additive manufacturing process", as used herein, refers to any process where a product is created by building it up one layer at a time, such as molding, but it typically refers to 3D printing. To create an object using additive manufacturing, someone must first create a design. This is typically done using computer-aided design (CAD) software, or by taking a 3D scan of the object someone wants to print. A software then translates the design into a layer by layer framework for the additive manufacturing machine to follow. This is sent to the 3D printer, which begins creating the object immediately. Additive manufacturing may use many materials, e.g., polymers, metals, and ceramics to foams, gels, and even biomaterials. As long as one can find a way to locally join two parts, 3D printing may be used.

The term "fused deposition modeling (FDM), as used herein, refers to a manufacturing process from the field of 3D printing, with which a workpiece is built up layer-by-layer from a fusible plastic or also - in newer technologies - from molten metal. The process is also known as "fused filament fabrication (FFF).

The term "selective laser sintering (SLS)", as used herein, refers to a manufacturing process from the field of 3D printing that uses a laser as the power and heat source to sinter powdered material (such as nylon or polyamide), aiming the laser automatically at points in space defined by a 3D model, and binding the material together to create a solid structure. This process is similar to selective laser melting.

The term "selective laser melting (SLM)", as used herein, refers to a manufacturing process from the field of 3D printing that belongs to the group of beam melting processes. A similar process is selective laser sintering. The process is also known as "laser beam melting" or "powder bed-based melting". In selective laser melting, the material to be processed is applied in powder form in a thin layer on a base plate. The powdered material is completely remelted locally using laser radiation and forms a solid material layer after solidification. The base plate is then lowered by the amount of layer thickness and powder is applied again. This cycle is repeated until all layers are remelted. The finished component is cleaned of excess powder, machined as required, or used immediately.

The term "stereolithography (SLA)", as used herein, refers to a manufacturing process in the field of 3D printing using photochemical processes by which light causes chemical monomers and oligomers to cross-link together to form polymers. Those polymers then make up the body of a 3D solid in a layer-by-layer fashion. The process is also known as vat photopolymeriation, optical fabrication, photo-solidification, or resin printing.

The term "computer tomography (CT)" as used herein, refers to a medical imaging technique used to obtain detailed internal images of a body. CT scanners use a rotating X-ray tube and a row of detectors placed in a gantry to measure X-ray attenuations by different tissues inside a body. The multiple X-ray measurements taken from different angles are then processed on a computer using tomographic reconstruction algorithms to produce tomographic (cross-sectional) images (virtual "slices") of a body.

The term "magnetic resonance (MR)", as used herein, refers to a medical imaging technique used in radiology to form pictures of the anatomy and the physiological processes of a body. MR image (MRI) scanners use strong magnetic fields, magnetic field gradients, and radio waves to generate images of the organs in a body. MRI does not involve X-rays or the use of ionizing radiation, which distinguishes it from CT and PET scans. MRI is a medical application of nuclear magnetic resonance (NMR) which can also be used for imaging in other NMR applications, such as NMR spectroscopy.

The term "contrast enhancement material", as used herein, refers to a material used in CT and MR imaging suitable to highlight structures such as blood vessels that otherwise would be difficult to delineate from their surroundings.

The term "carbon fiber-reinforced material", as used herein, refers to polymers that contain carbon fibers. The binding polymer is often a thermoset resin such as an epoxy resin, but other thermoset or thermoplastic polymers, such as polyesters, vinyl esters, or nylon^{®}, are used. The properties of the final carbon fiber-reinforced material can be affected by the type of additives introduced to the binding matrix (resin). The most common additive is silica, but other additives such as rubber and carbon nanotubes may be used. Carbon fiber-reinforced materials are commonly used wherever high strength-to-weight ratio and stiffness (rigidity) are required.

The term "superabsorbent polymer (SAP)", as used herein, refers to a water-absorbing polymer that can absorb and retain extremely large amounts of a liquid relative to its mass. An SAP's ability to absorb water depends on the ionic concentration of the aqueous solution. In deionized and distilled water, an SAP may absorb 300 times its weight (from 30 to 60 times its volume) and can become up to 99.9% liquid. The SAP's total absorbency and swelling capacity are controlled by the type and degree of cross-linkers used to make the polymer. Low-density cross-linked SAPs generally have a higher absorbent capacity, swell to a larger degree, and have a softer and stickier gel formation. High cross-link density polymers exhibit lower absorbent capacity and swell, and the gel strength is firmer and can maintain particle shape even under modest pressure.

The term "acceleration sensor", as used herein, refers to a measuring device (accelerometer) that comprises a proof mass on a spring. Under the influence of external accelerations, the proof mass deflects from its neutral position. This deflection is measured in an analog or digital manner.

The term "minimally-invasive surgical procedure", as used herein, refers to surgical techniques that limit the size of incisions needed and so lessen wound healing time, associated pain, and risk of infection. Surgery by definition is invasive and many operations requiring incisions of some size are referred to as open surgery, in which incisions made can sometimes leave large wounds that are painful and take a long time to heal.

The term "surgical robot", as used herein, refers to robotic systems used in surgical procedures, such as minimally-invasive surgical procedures. In the case of robotically assisted minimally-invasive surgery, instead of directly moving the instruments, the surgeon usually uses one of two methods to administer the instruments. These include using a direct telemanipulator or using computer-controlled systems. A telemanipulator is a remote manipulator that allows the surgeon to perform the normal movements associated with the surgery. The robotic arms carry out the movements using end-effectors and manipulators to perform the actual surgery.In computer-controlled systems, the surgeon uses a computer to control the robotic arms and their end-effectors and manipulators, however, these systems can also still use telemanipulators for their input. One advantage of using the computerized method is that the surgeon does not have to be present physically, leading to the possibility ofa remote surgery.

The term "implant", as used herein, refers to an artificial material intended for placement in a human or animal body. In particular, the term "implant" refers to an artificial material implanted in a body to remain there permanently or at least for a longer period of time. The term "implant" can be applied to the entire spectrum of medical devices intended for placement in a human or animal body. Thus, an implant may be a "prosthesis", wherein the term "prosthesis" refers to a medical device that replaces a missing body part, which may be lost through trauma, disease, or otherwise. A prosthesis is intended to restore the normal functions of the missing body part, and can also be designated as a prosthetic implant.

The term "tissue engineering", as used herein, refers to a biomedical engineering discipline that uses a combination of cells, engineering, materials methods, and suitable biochemical and physicochemical factors to restore, maintain, improve, or replace different types of biological tissues. Tissue engineering often involves the use of cells placed on tissue scaffolds in the formation of new viable tissue for a medical purpose. The term regenerative medicine is often used synonymously with tissue engineering, although in regenerative medicine more emphasis is put on the use of stem cells or progenitor cells to produce tissues.

The term "surgical operation instruments", as used herein, refers to any instrument used by a surgeon, e.g., scissors, forceps, organ and tissue grasping forceps, hemostatic forceps, bulldog clamps, vessel clips, approximators, dissecting- and ligature forceps, surgical needles, needle cases, needle holder, suture instruments, ligature needles, drill chisels, and wound retractors.

The term "exoskeleton(s)", as used herein, refers to an external skeleton that supports and protects a human body in contrast to the internal skeleton (endoskeleton). In brief, exoskeletons are wearable machines augmenting human strength and endurance, thereby reducing the risk of worker injury through the transference of weight and load forces from the body to a motorized, external frame. An advantage is, that a human exoskeleton makes heavy-duty tasks lighter and easier to work with.

No language in this specification should be construed as indicating any non claimed element as essential to the practice of the invention.

### Embodiments

The present invention is intended to provide an *ex vivo* biophantom, i.e., an anatomically realistic imitation of a human thorax for the training of surgical and minimally-invasive surgical procedures, in particular thorax surgery, as well as for research purposes.

Thus, in a first aspect, the present invention relates to an *ex vivo* biophantom comprising or consisting of a thorax imitation with a sternum, thoracic vertebrae, and rib pairs; wherein said thorax imitation comprises in its interior: (i) at least one living tissue chamber that comprises a living tissue of a thorax organ or a thorax functional tissue to simulate a thorax organ or a thorax functional tissue of a patient; and (ii) a perfusion system connected to said at least one living tissue chamber which supplies said living tissue with oxygen and nutrients and sets said biophantom in motion to simulate real physiological breathing.

Specifically, the present invention relates to an *ex vivo* biophantom comprising or consisting of an anatomically realistic thorax imitation with a sternum, thoracic vertebrae, and rib pairs produced using additive manufacturing processes based on 3 D data of real patients; wherein said thorax imitation comprises in its interior: (i) at least one living tissue chamber that comprises a living tissue of a thorax organ or a thorax functional tissue to simulate a thorax organ or a thorax functional tissue of a patient; and (ii) a perfusion system connected to said at least one living tissue chamber which supplies said living tissue with oxygen and nutrients and sets said biophantom in motion to simulate real physiological breathing.

In one embodiment of the invention, the inventive thorax imitation is an imitation of a male, female, or child thorax.

In another embodiment of the invention, the inventive thorax imitation comprises interchangeable rips. This has the advantage that anatomically different rib forms may be used with the biophantom.

In yet another embodiment of the invention, the inventive thorax imitation is produced by an additive manufacturing process based on anatomical 3D data of real patients. The additive manufacturing process used in the invention is not subject to any special limitations and refers to any process where a product is created by building it up one layer at a time, such as molding, but it typically refers to 3D printing. To create an object using additive manufacturing, at first a design is created. This can be done, e.g., by using computer-aided design (CAD) software, or by taking a 3D scan of the object (e.g., computer tomography scans of a patient for an anatomical object) to be printed. A software then translates the design into a layer-by-layer framework for the additive manufacturing machine to follow. This is sent to the 3D printer, which begins creating the object immediately. Additive manufacturing may use any type of materials, from polymers, metals, and ceramics to foams, gels, and even biomaterials as long as there is a way to locally join two parts. Examples of additive manufacturing processes suitable for use in the invention are fused deposition modeling (FDM), selective laser sintering (SLS), selective laser melting (SLM), and stereolithography (SLA).

In another embodiment of the invention, the inventive thorax imitation is made from a material suitable for computer tomography (CT) and/or magnetic resonance (MR). This has the advantage that the inventive thorax imitation maps exactly the complex anatomy of the human thoracic skeleton for the first time and is therefore suitable, for example, for the further development of, e.g., thoracic osteosynthesis implants as well as for the training of clinical users. Examples for CT/MR suitable materials are polylactide (PLA), acrylonitrile butadiene styrene (ABS) copolymer, polyetheretherketone (PEEK), high impact polystyrene (HIPS), polyamide (nylon^{®}) (PA), polyethylene terephthalate (PET), polyethylene terephthalate with glycol (PETG), thermoplastic polyurethane (TPU), and combinations of these materials.

In addition, the CT/MR materials suitable for use in the invention may be doped with a contrast enhancement material to improve CT and/or MR imaging of the inventive thorax imitation. The contrast enhancement material used in the invention is not subject to any special limitations, e.g., copper sulfate (CuSO₄) may be used which can be present in an amount of 1 to 4 mmol, e.g., 1; 1.5; 2; 2.5, 3; 3.5; or 4 mmol per gram thorax imitation material.

In further embodiments of the invention, the inventive thorax imitation comprises on its inner surface a skin imitation that simulates the real skin pleura distances of a patient (depends on the patient data used: a man has there stronger muscles than a child, a woman has there more fat tissue than a man) and on its outer surface a skin imitation that simulates the haptic, physiological, and imaging properties (e.g., in computer tomography (CT) and/or magnetic resonance (MR) imaging) of a patient's skin. This allows surgical manipulations to be trained more realistically.

These skin imitations can be made from a material suitable for computer tomography (CT) and/or magnetic resonance (MR), for example, a silicone material, a carbon fiber-reinforced material, a polyvinylalcohol (PVA) material, a superabsorbent polymer material, a thermoplastic urethane material, and combinations of these materials. In addition, the skin imitation materials suitable for use in the invention may be doped with a contrast enhancement material to improve CT and/or MR imaging of the inventive thorax imitation. The contrast enhancement material suitable for use in the invention is not subject to any special limitations, e.g., copper sulfate (CuSO₄) may be used which can be present in an amount of 1 to 4 mmol, e.g., 1; 1.5; 2; 2.5, 3; 3.5; 4 mmol per gram skin imitation material.

In another embodiment of the invention, the inventive thorax imitation comprises a diaphragm imitation at its lower aperture. This diaphragm imitation can be made from a material suitable for computer tomography (CT) and/or magnetic resonance (MR), for example, a silicone material, a carbon fiber-reinforced material, a polyvinylalcohol (PVA) material, a superabsorbent polymer material, a thermoplastic urethane material, and combinations of these materials. In addition, the diaphragm imitation materials suitable for use in the invention may be doped with a contrast enhancement material to improve CT and/or MR imaging of the inventive thorax imitation. The contrast enhancement material suitable for use in the invention is not subject to any special limitations, e.g., copper sulfate (CuSO₄) may be used which can be present in an amount of 1 to 4 mmol, e.g., 1; 1.5; 2; 2.5, 3; 3.5; 4 mmol per gram diaphragm imitation material.

The living tissue chamber in the interior of the inventive thorax imitation comprises:
a) 2 chambers of which the upper is perfused with air and the lower is perfused with nutritional medium, and
b) a silicon membrane which allows for interventional piercing and surgical intervention on the tissue.

The tissue will be tucked in between the two compartments.

In one embodiment of the invention, the living tissue chamber in the interior of the inventive thorax imitation is made of a material suitable for computer tomography and/or magnetic resonance (MR), for example, polylactide (PLA), acrylonitrile butadiene styrene (ABS) copolymer, polyetheretherketone (PEEK), high impact polystyrene (HIPS), polyamide (nylon^{®}) (PA), polyethylene terephthalate (PET), polyethylene terephthalate with glycol (PETG), thermoplastic polyurethane (TPU), and combinations of these materials.

In another embodiment of the invention, the living tissue chamber in the interior of the inventive thorax imitation comprises living tissue from thorax organs or thorax functional tissue to simulate a thorax organ or a thorax functional tissue of a patient, for example, lung tissue, heart tissue, thymus tissue, esophagus tissue, trachea tissue, or tissue from muscles, veins, arteries, nerves, lymphatic vessels, adipose tissue, or pleural membranes. The above tissues may be healthy or diseased tissue, e.g., healthy or diseased lung tissue, prepared by known tissue engineering methods, e.g., using a decellularized rat lung colonized with human lung cells. The inventive biophantom may then be used for predicting the likelihood of success of therapies, e.g. oncological therapies such as the treatment of lung cancer.

In yet another embodiment of the invention, the living tissue chamber in the interior of the inventive thorax imitation comprises a window that can be penetrated with a needle.

The living tissue chamber in the interior of the inventive thorax imitation is connected to a perfusion system which supplies the living tissue inside the chamber with oxygen, nutrients, and other vital components, removes metabolic products and carbon dioxide, and maintains the required physiological pH value, temperature, humidity, and osmotic conditions, for example, the perfusion system for this purpose supplies the living tissue with blood.

In one embodiment of the invention, the perfusion system comprises tubes and a peristaltic pump. The skilled artisan appreciates that any pump may be used, but using a peristaltic pump has the advantage that the pumping action sets the inventive biophantom in motion to simulate real physiological breathing with this. This allows surgical manipulations to be trained more realistically. The present inventors also have developed a bag-pump which simulates the beating heart.

In another embodiment of the invention, the inventive biophantom may further comprise a moving means to set the living tissue chamber inside the inventive biophantom in motion to simulate real physiological breathing. This moving means can be, e.g., a pneumatically or electrically driven actuator. The electrically driven actuator may be, for example, a motorized sled.

In yet another embodiment of the invention, the inventive biophantom has a modular construction for coupling to other biophantom modules, e.g., modules for the imitation of a human abdomen, neck/head, and female breasts. A biophantom module for the imitation of a human abdomen may comprise a living tissue chamber comprising, e.g., living liver tissue, and a biophantom module for the imitation of a human neck/head may comprise a living tissue chamber comprising, e.g., living pharynx tissue.

In one embodiment of the invention, the inventive biophantom may further comprise at least one sensor, for example, an acceleration sensor for crash tests.

In a second aspect, the present invention relates to the use of the inventive biophantom for *ex vivo* training of surgical and minimally-invasive surgical procedures as well as for research purposes. The advantages of the use for the training of surgical manipulations are that the inventive thorax imitation is anatomically realistic, in particular regarding the imitation of the complex anatomy of the human ribs, the used skin imitations provide a realistic haptic, and the real physiological breathing is simulated. The above surgical procedures may comprise using a surgical robot.

In a third aspect, the present invention relates to the use of the inventive biophantom for the development and optimization of implants. An implant may be any artificial material intended for placement in a human or animal body, in particular, an artificial material implanted in the body to remain there permanently or at least for a longer period of time. For example, the implant may be a prosthesis, wherein the term prosthesis refers to a medical device that replaces a missing body part, which may be lost through trauma, disease, or otherwise. A prosthesis is intended to restore the normal functions of the missing body part, and can also be designated as a prosthetic implant. In one embodiment of the invention, the implant is a rip.

In a fourth aspect, the present invention relates to the use of the inventive biophantom for the development and optimization of surgical operation instruments, i.e., any instrument used by a surgeon, e.g., scissors, forceps, organ and tissue grasping forceps, hemostatic forceps, bulldog clamps, vessel clips, approximators, dissecting- and ligature forceps, surgical needles, needle cases, needle holder, suture instruments, ligature needles, drill chisels, and wound retractors.

In a fifth aspect, the present invention relates to the use of the inventive biophantom for the development and optimization of exoskeletons. Exoskeletons are external skeletons that support and protect a human body in contrast to the internal skeleton (endoskeleton). In brief, exoskeletons are wearable machines augmenting human strength and endurance, thereby reducing the risk of worker injury through the transference of weight and load forces from the body to a motorized, external frame. In short, a human exoskeleton makes lighter, easier work of heavy-duty tasks.

The use of the inventive biophantom as described above are preferably *ex vivo* uses.

The invention is summarized as follows:
1. An *ex vivo* biophantom comprising or consisting of:
   an anatomically realistic thorax imitation with a sternum, thoracic vertebrae, and rib pairs produced using additive manufacturing processes based on 3 D data of real patients; wherein
   said thorax imitation comprises in its interior:
      (i) at least one living tissue chamber that comprises a living tissue of a thorax organ or a thorax functional tissue to simulate a thorax organ or a thorax functional tissue of a patient; and
      (ii) a perfusion system connected to said at least one living tissue chamber which supplies said living tissue with oxygen and nutrients and sets said biophantom in motion to simulate real physiological breathing.
2. The biophantom according to item 1, wherein said thorax imitation is an imitation of a male, female, or child thorax.
3. The biophantom according to items 1 or 2, wherein said thorax imitation comprises interchangeable rips.
4. The biophantom according to any one of items 1 to 3, wherein said thorax imitation is produced by an additive manufacturing process selected from the group consisting of fused deposition modeling (FDM), selective laser sintering (SLS), selective laser melting (SLM), and stereolithography (SLA).
5. The biophantom according to any one of items 1 to 4, wherein said thorax imitation is made from a material suitable for computer tomography (CT) and/or magnetic resonance (MR).
6. The biophantom according to item 5, wherein said material is selected from the group consisting of polylactide (PLA), acrylonitrile butadiene styrene (ABS) copolymer, polyetheretherketone (PEEK), high impact polystyrene (HIPS), polyamide (nylon^{®}) (PA), polyethylene terephthalate (PET), polyethylene terephthalate with glycol (PETG), thermoplastic polyurethane (TPU), and combinations of these materials.
7. The biophantom according to items 5 or 6, wherein said material is doped with a contrast enhancement material to improve CT and/or MR imaging of said thorax imitation.
8. The biophantom according to item 7, wherein said contrast enhancement material is copper sulfate (CuSO₄).
9. The biophantom according to item 8, wherein said copper sulfate is present in an amount of 1 to 4 mmol per gram material.
10. The biophantom according to any one of items 1 to 9, wherein said thorax imitation comprises on its inner surface a skin imitation that simulates the real skin pleura distances of a patient.
11. The biophantom according to any one of items 1 to 10, wherein said thorax imitation comprises on its outer surface a skin imitation that simulates the haptic and physiological properties of a patient's skin.
12. The biophantom according to items 10 or 11, wherein said skin imitation is made from a material suitable for computer tomography (CT) and/or magnetic resonance (MR).
13. The biophantom according to item 12, wherein said material is selected from the group consisting of a silicone material, a carbon fiber-reinforced material, a polyvinylalcohol (PVA) material, a superabsorbent polymer material, a thermoplastic urethane material, and combinations of these materials.
14. The biophantom according to items 12 or 13, wherein said material is doped with a contrast enhancement material to improve CT and/or MR imaging of said skin imitation.
15. The biophantom according to item 14, wherein said contrast enhancement material is copper sulfate (CuSO₄).
16. The biophantom according to item 15, wherein said copper sulfate is present in an amount of 1 to 4 mmol per gram material.
17. The biophantom according to any one of items 1 to 16, wherein said thorax imitation comprises a diaphragm imitation at its lower aperture.
18. The biophantom according to item 17, wherein said diaphragm imitation is made from a material suitable for computer tomography (CT) and/or magnetic resonance (MR).
19. The biophantom according to item 18, wherein said material is selected from the group consisting of a silicone material, a carbon fiber-reinforced material, a polyvinylalcohol (PVA) material, a superabsorbent polymer material, a thermoplastic urethane material, and combinations of these materials.
20. The biophantom according to items 18 or 19, wherein said material is doped with a contrast enhancement material to improve CT and/or MR imaging of said diaphragm imitation.
21. The biophantom according to item 20, wherein said contrast enhancement material is copper sulfate (CuSO₄).
22. The biophantom according to item 21, wherein said copper sulfate is present in an amount of 1 to 4 mmol per gram material.
23. The biophantom according to any one of items 1 to 22, wherein said at least one living tissue chamber is made of a material suitable for computer tomography and/or magnetic resonance (MR).
24. The biophantom according to item 23, wherein said material is selected from the group consisting of polylactide (PLA), acrylonitrile butadiene styrene (ABS) copolymer, polyetheretherketone (PEEK), high impact polystyrene (HIPS), polyamide (nylon^{®})(PA), polyethylene terephthalate (PET), polyethylene terephthalate with glycol (PETG), thermoplastic polyurethane (TPU), and combinations of these materials.
25. The biophantom according to any one of items 1 to 24, wherein said at least one living tissue chamber comprises living tissue selected from the group consisting of lung tissue, heart tissue, thymus tissue, esophagus tissue, and trachea tissue.
26. The biophantom according to any one of items 1 to 25, wherein said at least one living tissue chamber comprises a window that can be penetrated with a needle.
27. The biophantom according to any one of items 1 to 26, wherein said perfusion system connected to said at least one living tissue chamber supplies said living tissue with blood.
28. The biophantom according to any one of items 1 to 27, wherein said perfusion system comprises tubes and a peristaltic pump.
29. The biophantom according to any one of items 1 to 28, wherein said biophantom further comprises a moving means to set said biophantom in motion to simulate real physiological breathing.
30. The biophantom according to item 29, wherein said moving means is a pneumatically or electrically driven actuator.
31. The biophantom according to item 30, wherein said electrically driven actuator is a motorized sled.
32. The biophantom according to any one of items 1 to 31, wherein said biophantom has a modular construction for coupling to other biophantom modules.
33. The biophantom according to item 32, wherein said other biophantom modules are selected from the group consisting of modules for the imitation of a human abdomen, neck/head, and female breasts.
34. The biophantom according to item 33, wherein said other biophantom module is an imitation of a human abdomen comprising a living tissue chamber comprising living liver tissue.
35. The biophantom according to item 33, wherein said other biophantom module is an imitation of a human neck/head comprising a living tissue chamber comprising living pharynx tissue.
36. The biophantom according to any one of items 1 to 35, wherein said biophantom comprises at least one sensor.
37. The biophantom according to item 36, wherein said at least one sensor is an acceleration sensor for crash tests.
38. Use of a biophantom according to any one of items 1 to 37 for *ex vivo* training of surgical and minimally-invasive surgical procedures as well as for research purposes.
39. The use of item 38, wherein said surgical procedures comprise using a surgical robot.
40. Use of a biophantom according to any one of items 1 to 37 for the development and optimization of implants.
41. The use according to item 40, wherein said implant is a rip.
42. Use of a biophantom according to any one of items 1 to 37 for the development and optimization of surgical operation instruments.
43. The use of item 42, wherein said surgical operation instrument is selected from the group consisting of drill chisels, sisals, and sutures.
44. Use of a biophantom according to any one of items 1 to 37 for the development and optimization of exoskeletons.

### BRIEF DESCRIPTION OF THE FIGURES

The following Figures are merely illustrative of the present invention and should not be construed to limit the scope of the invention as indicated by the appended claims in any way.

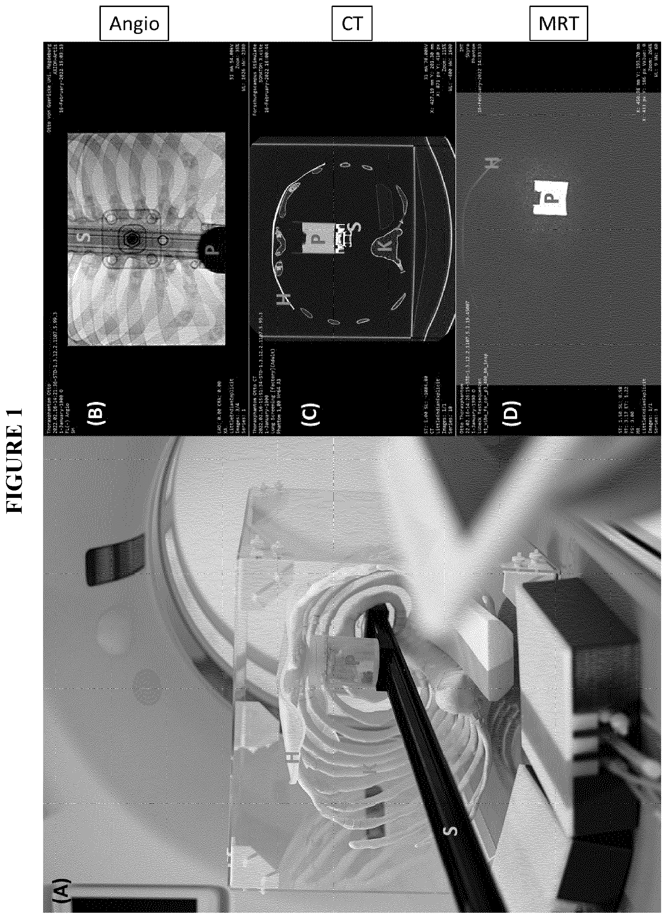

FIGURE 1 shows an embodiment of the inventive thorax imitation in imaging. (A) with bone K, skin H, collagen phantom P, and splint S. Angio (B) and CT (C) measurements show all components. MRT measurements (D) show the skin and collagen phantom.

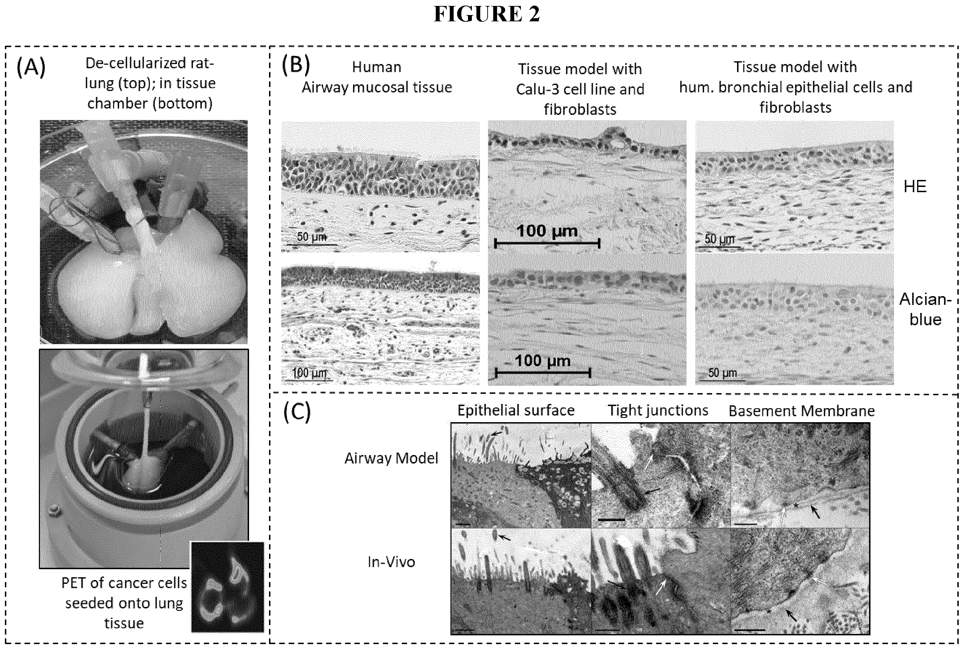

FIGURE 2 shows (A) a decellularized rat lung colonized with human lung cells (top) in a living tissue chamber according to the invention (bottom) and a F-18 desoxyglucose positron emission tomography (FDG PET) examination (insert). (B) shows histologically and (C) electron microscopically the high in vivo - in vitro correlation. A: Modified according to Gottlich, C. et al. A Combined 3D Tissue Engineered In Vitro/In Silico Lung Tumor Model for Predicting Drug Effectiveness in Specific Mutational Backgrounds., J Vis Exp, e53885, doi: 10.3791/53885 (2016). B,C: Modified according to Steinke, M. et al. An engineered 3D human airway mucosa model based on an SIS scaffold., Biomaterials 35, 7355-7362, doi:10.1016/j.biomaterials.2014.05.031 (2014).

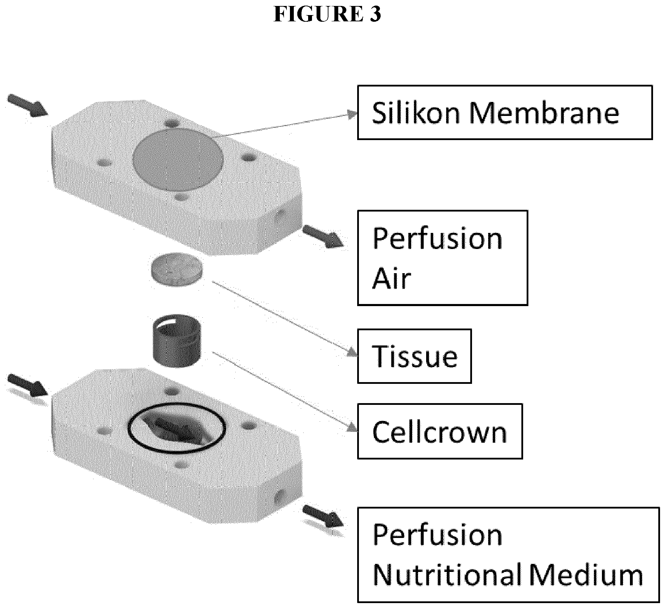

FIGURE 3 shows a living tissue chamber as used in the interior of the inventive thorax imitation that comprises 2 chambers of which the upper is perfused with air and the lower is perfused with nutritional medium, and a silicon membrane which allows for interventional piercing and surgical intervention on the tissue.

While certain representative embodiments and details have been shown to illustrate the present invention, it will be apparent to those skilled in this art that various changes and modifications can be made and that, within the scope of the appended claims, the invention may be practiced otherwise than as specifically described and claimed.

## Claims

1. An *ex vivo* biophantom comprising or consisting of:
an anatomically realistic thorax imitation with a sternum, thoracic vertebrae, and rib pairs produced using additive manufacturing processes based on 3 D data of real patients; wherein
said thorax imitation comprises in its interior:
(i) at least one living tissue chamber that comprises a living tissue of a thorax organ or a thorax functional tissue to simulate a thorax organ or a thorax functional tissue of a patient; and
(ii) a perfusion system connected to said at least one living tissue chamber which supplies said living tissue with oxygen and nutrients and sets said biophantom in motion to simulate real physiological breathing.

2. The biophantom according to claim 1, wherein said thorax imitation is produced by an additive manufacturing process selected from the group consisting of fused deposition modeling (FDM), selective laser sintering (SLS), selective laser melting (SLM), and stereolithography (SLA).

3. The biophantom according to claims 1 or 2, wherein said thorax imitation is made from a material suitable for computer tomography (CT) and/or magnetic resonance (MR).

4. The biophantom according to claim 3, wherein said material is selected from the group consisting of polylactide (PLA), acrylonitrile butadiene styrene (ABS) copolymer, polyetheretherketone (PEEK), high impact polystyrene (HIPS), polyamide (nylon^{®}) (PA), polyethylene terephthalate (PET), polyethylene terephthalate with glycol (PETG), thermoplastic polyurethane (TPU), and combinations of these materials.

5. The biophantom according to any one of claims 1 to 4, wherein said thorax imitation comprises on its inner surface a skin imitation that simulates the real skin pleura distances of a patient.

6. The biophantom according to any one of claims 1 to 5, wherein said thorax imitation comprises a diaphragm imitation at its lower aperture.

7. The biophantom according to any one of claims 1 to 6, wherein said at least one living tissue chamber is made of a material suitable for computer tomography and/or magnetic resonance (MR).

8. The biophantom according to claim 7, wherein said material is selected from the group consisting of polylactide (PLA), acrylonitrile butadiene styrene (ABS) copolymer, polyetheretherketone (PEEK), high impact polystyrene (HIPS), polyamide (nylon^{®})(PA), polyethylene terephthalate (PET), polyethylene terephthalate with glycol (PETG), thermoplastic polyurethane (TPU), and combinations of these materials.

9. The biophantom according to any one of claims 1 to 8, wherein said at least one living tissue chamber comprises living tissue selected from the group consisting of lung tissue, heart tissue, thymus tissue, esophagus tissue, and trachea tissue.

10. The biophantom according to any one of claims 1 to 9, wherein said at least one living tissue chamber comprises a window that can be penetrated with a needle.

11. The biophantom according to any one of claims 1 to 10, wherein said perfusion system connected to said at least one living tissue chamber supplies said living tissue with blood.

12. The biophantom according to any one of claims 1 to 11, wherein said perfusion system comprises tubes and a peristaltic pump.

13. The biophantom according to any one of claims 1 to 12, wherein said biophantom further comprises a moving means to set said biophantom in motion to simulate real physiological breathing.

14. The biophantom according to any one of claims 1 to 13, wherein said biophantom has a modular construction for coupling to other biophantom modules, wherein said other biophantom modules are preferably selected from the group consisting of modules for the imitation of a human abdomen, neck/head, and female breasts.

15. Use of a biophantom according to any one of claims 1 to 14 for
*ex vivo* training of surgical and minimally-invasive surgical procedures as well as for research purposes,
the development and optimization of implants,
the development and optimization of surgical operation instruments, or
the development and optimization of exoskeletons.
